# EUROPÄISCHE PATENTSCHRIFT

(11) **EP 3 566 398 B1**
(45) Veröffentlichungstag und Bekanntmachung des Hinweises auf die Patenterteilung: **26.02.2020**
(21) Anmeldenummer: 18789600.6
(22) Anmeldetag: 17.10.2018
(51) Int. Cl.: H04L 12/40, G06F 21/50

(54) **VERFAHREN UND HALBLEITERSCHALTKREIS ZUM SCHÜTZEN EINES BETRIEBSSYSTEMS EINES SICHERHEITSSYSTEMS EINES FAHRZEUGS**
METHOD AND SEMICONDUCTOR CIRCUIT FOR PROTECTING AN OPERATING SYSTEM OF A SECURITY SYSTEM OF A VEHICLE
PROCÉDÉ ET CIRCUIT À SEMI-CONDUCTEUR POUR PROTÉGER UN SYSTÈME D'EXPLOITATION D'UN SYSTÈME DE SÉCURITÉ D'UN VÉHICULE

(30) Priorität: 26.10.2017 DE 102017219241
(43) Veröffentlichungstag der Anmeldung: 13.11.2019
(73) Patentinhaber: Audi AG, 85045 Ingolstadt (DE)
(72) Erfinder: KLEIN, Markus, 85104 Pförring (DE); ZAWADZKI, Kamil, 81827 München (DE); AHN, Changsup, 85057 Ingolstadt (DE); GRUBER, Hans-Georg, 85049 Ingolstadt (DE)
(86) Internationale Anmeldenummer: PCT/EP2018/078427
(87) Internationale Veröffentlichungsnummer: WO 2019/081308

(56) Entgegenhaltungen:
- US-A1- 2012 060 220
- US-A1- 2016 352 756
- Paul D Williams: "CuPIDS: Increasing information system security through the use of dedicated co-processing", , 1. Januar 2005 (2005-01-01), XP055528704, ISBN: 978-0-542-35741-1 Gefunden im Internet: URL:https://apps.dtic.mil/dtic/tr/fulltext /u2/a440440.pdf [gefunden am 2018-11-29]
- KENICHI KOURAI ET AL: "A Secure Framework for Monitoring Operating Systems Using SPEs in Cell/B.E", DEPENDABLE COMPUTING (PRDC), 2012 IEEE 18TH PACIFIC RIM INTERNATIONAL SYMPOSIUM ON, IEEE, 18. November 2012 (2012-11-18), Seiten 41-50, XP032283398, DOI: 10.1109/PRDC.2012.13 ISBN: 978-1-4673-4849-2

## Beschreibung

Die Erfindung betrifft ein Verfahren zum Schützen eines Betriebssystems eines Sicherheitssystems, welches in einem Arbeitsspeicher eines Steuergeräts eines Fahrzeugs gespeichert ist, vor einer irregulären Modifikation.

Gewöhnlich umfasst ein Fahrzeug mehrere unterschiedliche Funktionssysteme, welche die Sicherheit des Fahrzeugs im Straßenverkehr oder den Komfort von Insassen des Fahrzeugs erhöhen. Zu den Sicherheitssystemen (Safety) des Fahrzeugs gehören beispielsweise ein Bremssystem und eine Motorsteuerung, während ein Infotainmentsystem und eine Klimaanlage den Komfortsystemen des Fahrzeugs zugerechnet werden.

Jedes Funktionssystem umfasst gewöhnlich mindestens eine in dem Fahrzeug angeordnete Vorrichtung sowie ein zu der Vorrichtung korrespondierendes Betriebssystem (Operating System, OS), welches eine Steuerlogik für die Vorrichtung aufweist und in einem Steuergerät des Fahrzeugs gespeichert und ausgeführt wird. Das Betriebssystem im Sinne dieser Erfindung umfasst ein Betriebssystem im engeren Sinne (beispielsweise ein Linux-Kern) und/oder mindestens ein spezielles auf die jeweilige Vorrichtung bezogenes Anwendungsprogramm.

Die mindestens eine korrespondierende Vorrichtung, welche in dem Fahrzeug naturgemäß beabstandet zu dem Steuergerät angeordnet ist, ist mit diesem üblicherweise über ein spezielles Bussystem bidirektional verbunden. Über das Bussystem werden Steuerdaten bzw. Zustandsdaten zwischen dem in dem Steuergerät gespeicherten Betriebssystem und der mindestens einen korrespondierenden Vorrichtung ausgetauscht.

Das Steuergerät und die mindestens eine Vorrichtung sind jeweils mittels einer geeigneten Schnittstelle an das Bussystem angeschlossen. Das Bussystem und die Schnittstellen müssen insbesondere bei einem Sicherheitssystem des Fahrzeugs jederzeit eine Echtzeit-Kommunikation zwischen dem Betriebssystem und der mindestens einen korrespondierenden Vorrichtung gewährleisten.

So offenbart die DE 10 2005 048 595 A1 eine sogenannte FlexRay-Schnittstelle, mittels derer ein FlexRay-Teilnehmer, also ein Steuegerät oder eine Vorrichtung des Fahrzeugs, an einen FlexRay-Bus angebunden werden kann. Die FlexRay-Schnittstelle umfasst teilnehmerseitig einen Eingangspufferspeicher und einen Ausgangspufferspeicher, die jeweils einen Teilpufferspeicher und einen zu dem Teilpufferspeicher korrespondierenden Schattenspeicher aufweisen. Durch abwechselndes lesendes bzw. schreibendes Zugreifen des FlexRay-Teilnehmers auf den Teilpufferspeicher und den Schattenspeicher des Eingangspufferspeichers bzw. des Ausgangspufferspeichers der FlexRay-Schnittsstelle lässt sich die Datenübermittlung zwischen dem FlexRay-Teilnehmer und dem FlexRay-Bus beschleunigen.

Neben einem schnellen Datenaustausch über das Bussystem muss für ein korrektes Funktionieren eines Funktionssystems vor allem jederzeit eine Unversehrtheit seines Betriebssystems in dem Steuergerät sichergestellt sein. Die Unversehrtheit ist eine notwendige Voraussetzung für ein fehlerfreies Ausführen des in dem Arbeitsspeicher des Steuergeräts gespeicherten Betriebssystems. Sie kann durch ein entsprechendes Schutzsystem (Security) für das Betriebssystem erreicht werden.

Wenn ein Betriebssystem beispielsweise während einer Fahrt des Fahrzeugs online aktualisiert wird, kann es insbesondere bei umfangreichen Betriebssystemen und entsprechend langer Aktualisierungsdauer zu undefinierten Zwischenzuständen des Betriebssystems in dem Arbeitsspeicher des Steuergeräts kommen, wodurch dessen einwandfreies Funktionieren beeinträchtigt sein kann.

Zum Schutz vor solchen Funktionsstörungen während einer Aktualisierung offenbart die US 2009 119 657 A1 ein Verfahren zum Aktualisieren von Anwendungsprogrammen in einem Arbeitsspeicher eines Steuergeräts eines Fahrzeugs. Bei dem Verfahren kann eine aktualisierte Version eines Anwendungsprogramms zunächst in einem "Schattenspeicher" genannten Pufferspeicher des Steuergeräts gespeichert werden, um eine Fehlfunktion des Fahrzeugs aufgrund eines undefinierten Zwischenzustands des betreffenden Anwendungsprogramms bei einer umfangreichen Aktualisierung während einer Fahrt des Fahrzeugs auszuschließen. Die in dem "Schattenspeicher" gespeicherte aktualisierte Version des Betriebssystems wird dann bei einem nächsten Starten des Fahrzeugs, also vor einem Antritt der Fahrt, in den Arbeitsspeicher gespiegelt, um wirksam zu werden.

In modernen Fahrzeugen werden mehrere Steuergeräte zunehmend in einem zentralen Steuergerät (Electronic Control Unit, ECU) zusammengefasst. Das zentrale Steuergerät weist einen Arbeitsspeicher auf, in welchem mehrere Betriebssysteme gleichzeitig gespeichert sind und parallel ausgeführt werden. Für diese Konstellation ist die Bezeichnung Virtualisierung gebräuchlich. Entsprechend wird ein Betriebssystem bei dieser Konstellation "virtualisiert" genannt.

In diesem Fall kann die Unversehrtheit eines Betriebssystems in dem Arbeitsspeicher des Steuergeräts auch durch weitere in dem Arbeitsspeicher des Steuergeräts gespeicherte Betriebssysteme beeinträchtigt sein. Beispielsweise kann ein Betriebssystem Speicherbereiche eines weiteren Betriebssystems mit Absicht, d. h. im Rahmen eines gezielten Angriffs, oder unbeabsichtigt, d. h. infolge eines Programmierfehlers, durch Überschreiben modifizieren.

Diese Gefahr ist noch dadurch erhöht, dass unterschiedliche Funktionssysteme eines Fahrzeugs üblicherweise von verschiedenen Herstellern geliefert werden und damit Betriebssysteme verschiedener Hersteller gleichzeitig in dem Arbeitsspeicher des Steuergeräts gespeichert und ausgeführt werden. Zudem können Betriebssysteme, welche unabhängig von jedem Funktionssystem des Fahrzeugs vorgesehen und von im Voraus unbekannten Herstellern bereitgestellt sind, beispielsweise zum freien Surfen im Internet, in dem Arbeitsspeicher des Steuergeräts gespeichert und ausgeführt werden. Ein Schutz vor einer wechselseitigen Modifikation mehrerer in dem Arbeitsspeicher gespeicherter und ausgeführter Betriebssysteme auch unterschiedlicher Hersteller kann auf verschiedene Weise bewirkt werden.

Die DE 10 2006 054 705 A1 offenbart beispielsweise ein Verfahren zum Betreiben eines in einem Arbeitsspeicher eines Steuergeräts eines Fahrzeugs gespeicherten Anwendungsprogramms, welches mehrere Programmteile unterschiedlicher Herkunft umfasst. Jeder Programmteil ist in einem eigenen Arbeitsspeicherbereich gespeichert. Um ein irreguläres Modifizieren eines in einem ersten Arbeitsspeicherbereich gespeicherten Programmteils durch einen in einem zweiten Arbeitsspeicherbereich gespeicherten Programmteil und damit eine Fehlfunktion des Anwendungsprogramms zu verhindern, werden bei dem Verfahren für jeden Programmteil des Anwendungsprogramms bezogen auf die Arbeitsspeicherbereiche Zugriffsrechte definiert. Wenn ein Programmteil im Rahmen einer regulären Aktualisierung (Update) modifiziert werden muss, kann zur Absicherung zudem der entsprechende Arbeitsspeicherbereich in einen Schattenspeicher gespiegelt werden.

Ein modernes zentrales Steuergerät kann auch einen hochintegrierten Halbleiterschaltkreis (System on Chip, SoC) umfassen, welcher sämtliche zum parallelen Ausführen mehrerer virtualisierter Betriebssysteme erforderlichen Funktionalitäten in einem Bauteil vereint, insbesondere einen Arbeitsspeicher und einen oder mehrere auf dem Arbeitsspeicher operierende Prozessoren. Wenn auf dem hochintegrierten Halbleiterschaltkreis Betriebssysteme von Sicherheitssystemen und Betriebssysteme von Komfortsystemen gleichzeitig gespeichert und parallel ausgeführt werden, muss einerseits sichergestellt sein, dass insbesondere die Betriebssysteme der Sicherheitssysteme vor einer irregulären Modifikation geschützt sind, andererseits dürfen übliche Funktionalitäten der Komfortsysteme durch ein Schutzsystem nicht eingeschränkt oder ausgeschlossen sein.

Eine bei hochintegrierten Halbleiterschaltkreisen übliche Maßnahme ist, einen sogenannten Hypervisor (Virtual Machine Monitor, VMM) als Schutzsystem für den Arbeitsspeicher einzusetzen. Ein Hypervisor ist konfiguriert, Zugriffe auf den Arbeitsspeicher zu überwachen und ggf. zu unterbinden. Er eignet sich deshalb besonders für virtualisierte Systeme, um mehrere innerhalb eines Arbeitsspeichers gleichzeitig gespeicherte und parallel ausgeführte Betriebssysteme voneinander zu separieren. Allerdings kann der Arbeitsspeicher durch die im Rahmen der Überwachung fortlaufend erforderlichen Zugriffe des Hypervisors beeinträchtigt werden, wodurch es bei dem Ausführen eines hypervisierten Betriebssystems zu Fehlern kommen kann.

Dies ist aber im Falle eines Betriebssystems eines Sicherheitssystems nicht hinnehmbar. Weiterhin kann ein Hypervisor auch selbst Ziel einer irregulären Modifikation sein oder den überwachten Speicherbereich infolge eines Programmierfehlers irregulär modifizieren. Deshalb muss ein Hypervisor dem internationalen Standard ISO 26262 genügen, was durch eine ASIL-Zertifizierung vor einer Inbetriebnahme erstmalig und in der Folge bei jeder Aktualisierung regelmäßig bestätigt werden muss. Gerade mit Blick auf eine üblicherweise hohe Aktualisierungsfrequenz des Hypervisors stellt die ASIL-Zertifizierung allerdings eine praktisch kaum überwindbare Hürde dar, weshalb ein Hypervisor zum Überwachen eines sicherheitskritischen Betriebssystems auf einem hochintegrierten Halbleiterschaltkreis ungeeignet ist.

Der Erfindung liegt daher die Aufgabe zugrunde, ein verbessertes Verfahren zum Schützen eines Sicherheitssystems vor irregulären Modifikationen vorzuschlagen, welches die beschriebenen Nachteile vermeidet. Darüber hinaus ist es Aufgabe der Erfindung, einen hochintegrierten Halbleiterschaltkreis zu schaffen, welcher zum Durchführen eines solchen Verfahrens geeignet ist.

Ein Gegenstand der vorliegenden Erfindung ist ein Verfahren zum Schützen eines Sicherheitssystems, welches in einem Arbeitsspeicher eines Steuergeräts eines Fahrzeugs gespeichert ist, vor einer irregulären Modifikation.

Erfindungsgemäß wird bei dem Verfahren mindestens ein Arbeitsspeicherbereich, welcher mindestens einen Teil des Betriebssystems des Sicherheitssystems speichert, von einem Schattenspeicher-Manager aus dem Arbeitsspeicher in einen Schattenspeicher gespiegelt. Der Schattenspeicher-Manager stellt ein Funktionsmodul dar, welches ausgebildet ist, Identität zwischen einem ersten bestimmten Speicherbereich und einem zweiten bestimmten Speicherbereich herzustellen, d. h. den ersten bestimmten Speicherbereich in den zweiten bestimmten Speicherbereich zu spiegeln. Infolge des Spiegelns existiert in dem Schattenspeicher dann ein Schattenspeicherbereich, welcher ein identisches Abbild des gespiegelten Arbeitsspeicherbereichs darstellt. Der Schattenspeicherbereich speichert infolgedessen ebenfalls den gespiegelten mindestens einen Teil des Sicherheitssystems. Bei dem Teil kann es sich beispielsweise um ein einzelnes Anwendungsprogramm des sicherheitskritischen Betriebssystems handeln.

Weiterhin wird erfindungsgemäß ein zu dem mindestens einen gespiegelten Arbeitsspeicherbereich korrespondierender Schattenspeicherbereich überwacht. Wenn der Arbeitsspeicherbereich eine irreguläre Modifikation aufweist, weist der Schattenspeicherbereich aufgrund der inhaltlichen Identität des Arbeitsspeicherbereichs und des Schattenspeicherbereichs dieselbe irreguläre Modifikation auf. Allerdings kann ein Zugriff eines Schutzsystems auf den Schattenspeicherbereich zur Überwachung nicht den gespiegelten Arbeitsspeicherbereich beeinträchtigen. Beispielsweise könnte ein Schutzsystem den überwachten Speicherbereich infolge eines Programmierfehlers irregulär modifizieren. Wenn in dem gespiegelten Arbeitsspeicherbereich ein Teil eines Betriebssystems eines Sicherheitssystems gespeichert ist, ist daher sowohl ein korrektes Ausführen des Sicherheitssystems als auch ein Überwachen des gespiegelten Teils des sicherheitskritischen Betriebssystems möglich. Im Ergebnis finden das Ausführen und das Schützen des gespiegelten Teils des sicherheitskritischen Betriebssystems in separaten Speichern statt und sind also voneinander separiert.

In einer bevorzugten Ausführungsform wird der mindestens eine Arbeitsspeicherbereich von dem Schattenspeicher-Manager automatisch und parallel in den Schattenspeicher gespiegelt. Auf diese Weise lässt sich gewährleisten, dass es zwischen dem mindestens einen Arbeitsspeicherbereich und dem korrespondierenden Schattenspeicherbereich keine Differenz gibt, wodurch ein Überwachen des Schattenspeicherbereichs äquivalent zu einem Überwachen des Arbeitsspeicherbereichs ist.

In einer weiteren Ausführungsform wird mindestens ein Arbeitsspeicherbereich, welcher mindestens einen Teil eines Komfortsystems speichert, von dem Schattenspeicher-Manager aus dem Arbeitsspeicher in den Schattenspeicher gespiegelt. Selbstverständlich lässt sich das Verfahren für beliebige Arbeitsspeicherbereiche des Arbeitsspeichers durchführen, d. h. auch solche, in denen Teile eines Komfortprogramms oder Teile eines Hypervisors gespeichert sind.

In vorteilhaften Ausführungsformen wird der Schattenspeicher-Manager mit einer Konfigurationsliste konfiguriert, welche mindestens einen in den Schattenspeicher zu spiegelnden Arbeitsspeicherbereich definiert. Die Konfigurationsliste stellt ein geeignetes Mittel dar, die Wirkung des Schattenspeicher-Managers zu bestimmen. Die Konfigurationsliste kann einen oder mehrere Arbeitsspeicherbereiche umfassen, welche von dem Schattenspeicher-Manager in den Schattenspeicher gespiegelt werden.

In einer bevorzugten Ausführungsform wird der Schattenspeicher-Manager konfiguriert, so dass eine summierte Speicherkapazität der zu spiegelnden Arbeitsspeicherbereiche geringer ist als eine Gesamtspeicherkapazität des Arbeitsspeichers. Mit anderen Worten werden bei dieser Konfiguration nicht alle Arbeitsspeicherbereiche gespiegelt. Beispielsweise kann auf ein Spiegeln solcher Arbeitsspeicherbereiche verzichtet werden, welche keine Teile eines sicherheitskritischen Betriebssystems speichern.

In noch einer weiteren Ausführungsform wird der Schattenspeicher-Manager während eines Startens des Steuergeräts oder geschützt während eines Betriebs des Steuergeräts konfiguriert. Auf diese Weise lässt sich während des Konfigurierens ein Angriff auf die Konfigurationsliste verhindern.

In einer bevorzugten Ausführungsform wird ein Zugreifen auf einen Arbeitsspeicherbereich, welcher mindestens einen Teil eines Komfortsystems speichert, von einem Hypervisor überwacht und/oder wird ein Zugreifen auf einen Schattenspeicherbereich, welcher zu einem Arbeitsspeicherbereich korrespondiert, welcher mindestens einen Teil des mindestens einen Sicherheitssystems speichert, von einem Sicherheitsinspektor überwacht. Der Hypervisor stellt ein geeignetes Schutzsystem für Teile von nicht sicherheitskritischen Betriebssystemen dar, welche in Arbeitsspeicherbereichen gespeichert sind und dort unmittelbar überwacht werden können. Für Teile sicherheitskritischer Betriebssysteme ist dagegen ein von dem Hypervisor verschiedener dedizierter Schutz-Inspektor als spezielles Schutzsystem vorteilhaft. Der Schutz-Inspektor überwacht ausschließlich den Schattenspeicher. Infolgedessen kann er anders als der Hypervisor nicht von einem in einem Arbeitsspeicherbereich gespeicherten Teil eines Betriebssystems irregulär modifiziert werden.

In einer vorteilhaften Ausführungsform wird mindestens ein in dem Arbeitsspeicher gespeichertes Betriebssystem eines Sicherheitssystems oder Komfortsystems von mindestens einem dedizierten Prozessor, welcher dem Betriebssystem ausschließlich zugeordnet ist, ausgeführt. Auf diese Weise wird auch prozessorseitig eine Isolation eines Betriebssystems eines Sicherheitssystems von Betriebssystemen von Komfortsystemen erreicht, was mit einer weiteren Verbesserung des Schutzes des sicherheitskritischen Betriebssystems einhergeht.

Gegenstand der Erfindung ist auch ein integrierter Halbleiterschaltkreis zum Schützen eines Sicherheitssystems vor einer irregulären Modifikation, welcher einen Arbeitsspeicher zum Speichern mindestens eines Betriebssystems eines Sicherheitssystems und mindestens eines Betriebssystems eines Komfortsystems, mindestens einen Prozessor zum Ausführen des mindestens einen Betriebssystems des Sicherheitssystems und des mindestens einen Betriebssystems des Komfortsystems und einen Schattenspeicher-Manager, welcher konfiguriert ist, mindestens einen Arbeitsspeicherbereich, welcher einen Teil des Betriebssystems des Sicherheitssystems speichert, in einem Verfahren nach einem der Ansprüche 1 bis 7 aus dem Arbeitsspeicher in einen Schattenspeicher zu spiegeln, in einer integrierten Topologie umfasst. Mit einem hochintegrierten Halbleiterschaltkreis, welcher mittels eines Schattenspeicher-Managers ein mittelbares Überwachen eines Arbeitsspeicherbereichs, welcher einen Teil eines sicherheitskritischen Betriebssystems speichert, ermöglicht, lassen sich Teile eines sicherheitskritischen Betriebssystems separat von Teilen eines Betriebssystems eines Komfortsystems überwachen. Vorteilhaft ist der Schattenspeicher-Manager als Teil des Halbleiterschaltkreises in einer Hardware realisiert. Dadurch wird eine größtmögliche Geschwindigkeit bei einem Spiegeln von Arbeitsspeicherbereichen erzielt.

In einer bevorzugten Ausführungsform umfasst der Halbleiterschaltkreis eine Konfigurationsliste des Schattenspeicher-Managers. Eine in Hardware realisierte Konfigurationsliste kann durch ein Betriebssystem nicht modifiziert werden. Dadurch ist die Konfigurationsliste vor einer Modifikation, insbesondere einem Angriff effektiv geschützt.

In einer weiteren Ausführungsform umfasst der Halbleiterschaltkreis den Schattenspeicher und ist insbesondere eine Speicherkapazität des Schattenspeichers geringer als eine Speicherkapazität des Arbeitsspeichers oder ist der Schattenspeicher-Manager ausgebildet, den mindestens einen Arbeitsspeicherbereich in einen externen Schattenspeicher, insbesondere einen DDR-Speicherbaustein (Double Data Rate), zu spiegeln, welcher von dem Halbleiterschaltkreis oder extern ansteuerbar ist und insbesondere eine Speicherkapazität aufweist, welche geringer ist als eine Speicherkapazität des Arbeitsspeichers. Für den Schattenspeicher kommen entsprechend mehrere unterschiedliche Realisierungsformen in Betracht. Eine Möglichkeit besteht darin, den Schattenspeicher im Rahmen des SoC-Designs als Teil des hochintegrierten Halbleiterschaltkreises vorzusehen. Alternativ kann er aber auch durch einen externen Speicherbaustein realisiert werden. Aus wirtschaftlichen und funktionalen Gründen sollte der Schattenspeicher nicht überdimensioniert werden. Er muss lediglich ausreichend bemessen sein, bestimmte Teile sicherheitskritischer Betriebssysteme aufzunehmen.

Die Erfindung ist anhand von Ausführungsformen in den Zeichnungen schematisch dargestellt und wird unter Bezugnahme auf die Zeichnungen weiter beschrieben. Es zeigt:
- Figur 1: in einem schematischen Blockschaltbild eine Ausführungsform eines nicht praktikablen Halbleiterschaltkreises;
- Figur 2: in einem schematischen Blockschaltbild eine Ausführungsform eines erfindungsgemäßen Halbleiterschaltkreises;
- Figur 3: in einem schematischen Blockschaltbild den in Figur 2 gezeigten Halbleiterschaltkreis mit zugeordneten Prozessoren;
- Figur 4: in einer schematischen Detaildarstellung eine Wirkungsweise einer ersten erfindungsgemäßen Konfigurationsliste;
- Figur 5: in einer schematischen Detaildarstellung eine Wirkungsweise einer zweiten erfindungsgemäßen Konfigurationsliste.

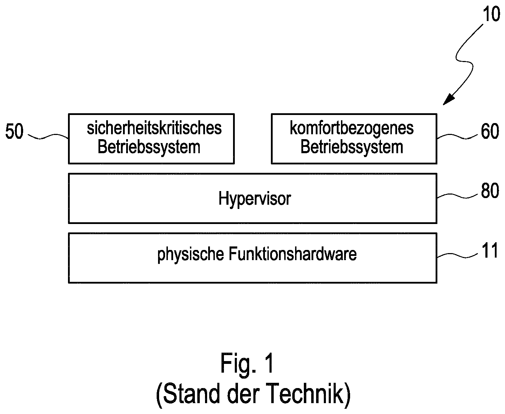

Figur 1 zeigt in einem schematischen Blockschaltbild eine Ausführungsform eines nicht praktikablen Halbleiterschaltkreises 10 für ein Steuergerät eines Fahrzeugs. Der hochintegrierte SoC-Halbleiterschaltkreis 10 umfasst eine physische Funktionshardware 11, welche einen Hypervisor 80, ein Betriebssystem 50 eines Sicherheitssystems des Fahrzeugs sowie ein Betriebssystem 60 eines Komfortsystems des Fahrzeugs speichert und ausführt. Während des Betriebs des Halbleiterschaltkreises 10 überwacht der Hypervisor 80 Speicherzugriffe des sicherheitskritischen Betriebssystems 50 sowie Speicherzugriffe des komfortbezogenen Betriebssystems 60. Allerdings kann der Hypervisor 80 von den Betriebssystemen 50 oder 60 modifiziert und beschädigt werden. Zudem kann das Überwachen des sicherheitskritischen Betriebssystems 50 durch den Hypervisor 80 einem korrekten Ausführen des sicherheitskritischen Betriebssystems 50 entgegenstehen. Ferner wäre bei dieser Ausführungsform der Hypervisor 80 vor der ersten Inbetriebnahme und bei jeder Aktualisierung einer ASIL-Zertifizierung zu unterziehen, um in Bezug auf das sicherheitskritische Betriebssystem eine Konformität des Hypervisors 80 mit dem internationalen Standard ISO 26262 zu bestätigen.

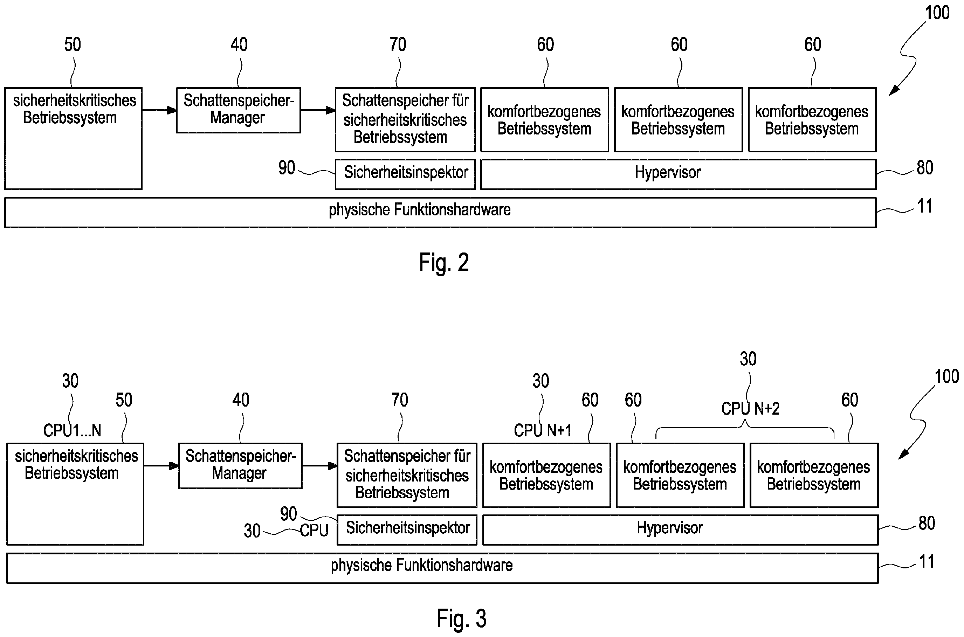

Figur 2 zeigt in einem schematischen Blockschaltbild eine Ausführungsform eines erfindungsgemäßen Halbleiterschaltkreises 100. Der hochintegrierte SoC-Halbleiterschaltkreis 100 umfasst in Analogie zu dem in Figur 1 gezeigten Halbleiterschaltkreis 10 eine physische Funktionshardware 11, welche einen Hypervisor 80, ein Betriebssystem 50 eines Sicherheitssystems des Fahrzeugs sowie drei Betriebssysteme 60 von Komfortsystemen des Fahrzeugs gleichzeitig speichert und parallel ausführt. Im Unterschied zu dem in Figur 1 gezeigten Halbleiterschaltkreis umfasst der Halbleiterschaltkreis 100 zusätzlich einen separaten Schattenspeicher 70 sowie einen Schattenspeicher-Manager 40, welcher konfiguriert ist, das sicherheitskritische Betriebssystem 50 in den Schattenspeicher 70 zu spiegeln. Ferner umfasst der Halbleiterschaltkreis 100 einen Sicherheitsinspektor 90 als Schutzsystem für den Schattenspeicher 70, der separat von dem Hypervisor 80 ausgebildet ist.

Während des Betriebs des Halbleiterschaltkreises 100 spiegelt der Schattenspeicher-Manager 40 das sicherheitskritische Betriebssystem 50 in den Schattenspeicher 70, welcher von dem Sicherheitsinspektor 90 überwacht wird. Die drei komfortbezogenen Betriebssysteme 60 werden wie in Figur 1 gezeigt von dem Hypervisor 80 überwacht.

Figur 3 zeigt in einem schematischen Blockschaltbild den in Figur 2 gezeigten Halbleiterschaltkreis 100 mit zugeordneten Prozessoren. Bei dieser Ausführungsform sind dem sicherheitskritischen Betriebssystem 50, dem Sicherheitsinspektor 90, einem komfortbezogenen Betriebssystem 60 sowie zwei komfortbezogenen Betriebssystemen 60 gemeinsam jeweils ein Prozessor 30 zugeordnet.

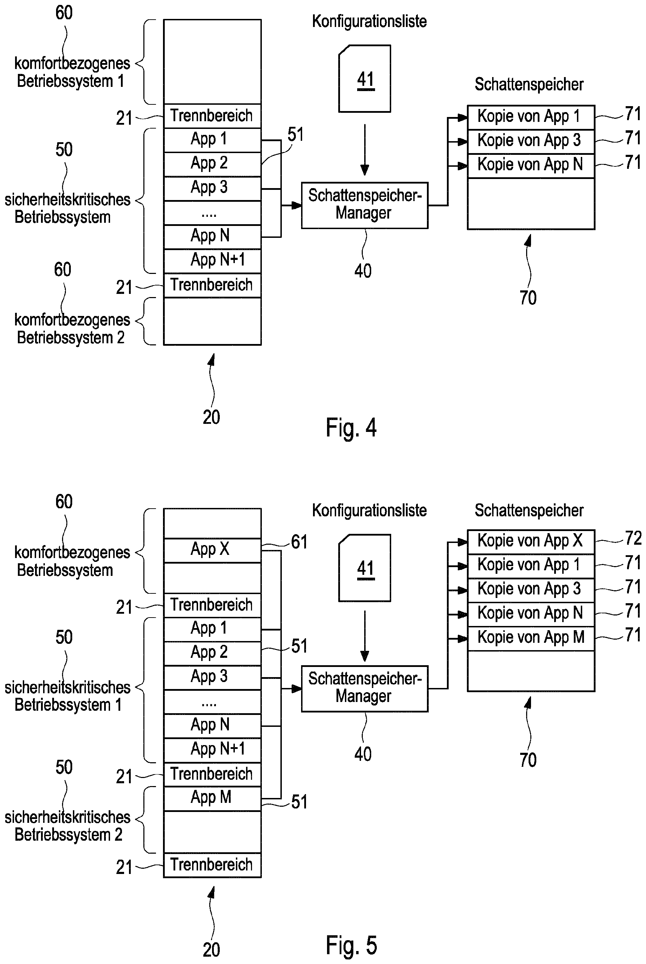

Figur 4 zeigt in einer schematischen Detaildarstellung eine Wirkungsweise einer ersten erfindungsgemäßen Konfigurationsliste 41. In einem Arbeitsspeicher 20 sind ein sicherheitskritische Betriebssystem 50 und zwei komfortbezogene Betriebssysteme 60 gespeichert. Das sicherheitskritische Betriebssystem 50 ist von den beiden komfortbezogenen Betriebssystemen 60 jeweils durch einen Trennbereich 21 getrennt. Das sicherheitskritische Betriebssystem 50 umfasst mehrere Teile App 1, App 2, App 3, ..., App N, App N+1, welche jeweils einzelne Anwendungsprogramme darstellen und in einem Arbeitsspeicherbereich 51 gespeichert sind. Ein Schattenspeicher-Manager 40 weist eine Konfigurationsliste 41 auf, welche drei Arbeitsspeicherbereiche 51 umfasst, in denen die Teile App 1, App 3 und App N des sicherheitskritischen Betriebssystems 50 gespeichert sind.

Während des Betriebs spiegelt der Schattenspeicher-Manager 40 die in der Konfigurationsliste 41 definierten Arbeitsspeicherbereiche 51 in einen Schattenspeicher 70, in welchem in korrespondierenden Schattenspeicherbereichen 71 Kopien der gespiegelten Arbeitsspeicherbereiche 51 gespeichert sind.

Figur 5 zeigt in einer schematischen Detaildarstellung eine Wirkungsweise einer zweiten erfindungsgemäßen Konfigurationsliste 41. Im Unterschied zu Figur 4 sind in dem Arbeitsspeicher 20 ein erstes sicherheitskritisches Betriebssystem 50, ein zweites sicherheitskritisches Betriebssystem 50 und ein komfortbezogenes Betriebssystem 60 gespeichert. Das zweite sicherheitskritische Betriebssystem 50 umfasst einen Teil App M, welcher in einem Arbeitsspeicherbereich 51 gespeichert ist, und das komfortbezogene Betriebssystem 60 umfasst einen Teil App X, welcher in einem Arbeitsspeicherbereich 61 gespeichert ist.

Die Konfigurationsliste 41 umfasst fünf Arbeitsspeicherbereiche 51, 61 in denen die Teile App1 , App 3 und App N des ersten sicherheitskritischen Betriebssystems 50, ein Teil App M des zweiten sicherheitskritischen Betriebssystems 50 und ein Teil App X des komfortbezogenen Betriebssystems 60 gespeichert sind.

Während des Betriebs spiegelt der Schattenspeicher-Manager 40 die in der Konfigurationsliste 41 definierten Arbeitsspeicherbereiche 51, 61 in den Schattenspeicher 70, in welchem in korrespondierenden Schattenspeicherbereichen 71, 72 Kopien der gespiegelten Arbeitsspeicherbereiche 51, 61 gespeichert sind.

Ein wesentlicher Vorteil des erfindungsgemäßen Verfahrens besteht darin, dass Teile eines sicherheitskritischen Betriebssystems 50 nicht unmittelbar in dem Arbeitsspeicher 20, sondern gespiegelt in dem Schattenspeicher 70 überwacht werden. Ein weiterer Vorteil ist darin zu sehen, dass zum Schützen des Schattenspeichers 70 ein separater Sicherheitsinspektor 90 verwendet wird, der von dem für das Schützen komfortbezogener Betriebssysteme vorgesehenen Hypervisor 80 verschieden ist. Auf diese Weise wird eine saubere Trennung zwischen dem Schutz sicherheitskritischer Betriebssysteme und komfortbezogener Betriebssysteme erreicht.

### BEZUGSZEICHENLISTE:

- 10: Halbleiterschaltkreis (Stand der Technik)
- 100: Halbleiterschaltkreis
- 11: physische Funktionshardware
- 20: Arbeitsspeicher
- 21: Trennbereich
- 30: Prozessor
- 40: Schattenspeicher-Manager
- 41: Konfigurationsliste
- 50: Betriebssystem eines Sicherheitssystems
- 51: Arbeitsspeicherbereich mit darin gespeichertem Teil des sicherheitskritischen Betriebssystems
- 60: Betriebssystem eines Komfortsystems
- 61: Arbeitsspeicherbereich mit darin gespeichertem Teil des komfortbezogenen Betriebssystems
- 70: Schattenspeicher
- 71: Schattenspeicherbereich mit darin gespiegeltem Teil des sicherheitskritischen Betriebsystems
- 72: Schattenspeicherbereich mit darin gespiegeltem Teil des komfortbezogenen Betriebssystems
- 80: Hypervisor
- 90: Sicherheitsinspektor

## Patentansprüche

1. Verfahren zum Schützen eines Betriebssystems eines Sicherheitssystems (50), welches in einem Arbeitsspeicher (20) eines Steuergeräts eines Fahrzeugs gespeichert ist, vor einer irregulären Modifikation, bei dem mindestens ein Arbeitsspeicherbereich (51), welcher mindestens einen Teil (App 1, App 2, App 3, ..., App N, App N+1, App M) des Betriebssystems des Sicherheitssystems (50) speichert, von einem Schattenspeicher-Manager (40) aus dem Arbeitsspeicher (20) in einen Schattenspeicher (70) gespiegelt wird und ein zu dem mindestens einen gespiegelten Arbeitsspeicherbereich (51) korrespondierender Schattenspeicherbereich (71) überwacht wird.

2. Verfahren nach Anspruch 1, bei dem der mindestens eine Arbeitsspeicherbereich (51) von dem Schattenspeicher-Manager (40) automatisch und parallel in den Schattenspeicher (70) gespiegelt wird.

3. Verfahren nach einem der Ansprüche 1 oder 2, bei dem mindestens ein Arbeitsspeicherbereich (61), welcher mindestens einen Teil (App X) eines Komfortsystems (60) speichert, von dem Schattenspeicher-Manager (40) aus dem Arbeitsspeicher (20) in den Schattenspeicher (70) gespiegelt wird.

4. Verfahren nach einem der Ansprüche 1 bis 3, bei dem der Schattenspeicher-Manager (40) mit einer Konfigurationsliste (41) konfiguriert wird, welche mindestens einen in den Schattenspeicher (70) zu spiegelnden Arbeitsspeicherbereich (51, 61) definiert und/oder bei dem der Schattenspeicher-Manager (40) derart konfiguriert wird, dass eine summierte Speicherkapazität der zu spiegelnden Arbeitsspeicherbereiche (51, 61) geringer ist als eine Gesamtspeicherkapazität des Arbeitsspeichers (20).

5. Verfahren nach Anspruch 4, bei dem der Schattenspeicher-Manager während eines Startens des Steuergeräts oder geschützt während eines Betriebs des Steuergeräts konfiguriert wird.

6. Verfahren nach einem der Ansprüche 1 bis 5, bei dem ein Zugreifen auf einen Arbeitsspeicherbereich (61), welcher mindestens einen Teil (App X) eines Komfortsystems (60) speichert, von einem Hypervisor (80) überwacht wird oder ein Zugreifen auf einen Schattenspeicherbereich (71), welcher zu einem Arbeitsspeicherbereich (51) korrespondiert, welcher mindestens einen Teil (App 1, App 2, App 3, ..., App N, App N+1, App M) des mindestens einen Sicherheitssystems (50) speichert, von einem Sicherheitsinspektor (90) überwacht wird.

7. Verfahren nach einem der Ansprüche 1 bis 6, bei dem mindestens ein in dem Arbeitsspeicher (20) gespeichertes Betriebssystem eines Sicherheitssystems (50) oder Komfortsystems (60) von mindestens einem dedizierten Prozessor (30), welcher dem Betriebssystem (50, 60) ausschließlich zugeordnet ist, ausgeführt wird.

8. Halbleiterschaltkreis (100) zum Schützen eines Sicherheitssystems (50) vor einer irregulären Modifikation, welcher einen Arbeitsspeicher (20) zum Speichern mindestens eines Betriebssystems eines Sicherheitssystems (50) und mindestens eines Betriebssystems eines Komfortsystems (60), mindestens einen Prozessor (30) zum Ausführen des mindestens einen Betriebssystems eines Sicherheitssystems (50) und des mindestens einen Betriebssystems eines Komfortsystems (60) und einen Schattenspeicher-Manager (40), welcher konfiguriert ist, mindestens einen Arbeitsspeicherbereich (51), welcher einen Teil (App 1, App 2, App 3, ..., App N, App N+1, App M) des Betriebssystems des Sicherheitssystems (50) speichert, in einem Verfahren nach einem der Ansprüche 1 bis 7 aus dem Arbeitsspeicher (20) in einen Schattenspeicher (70) zu spiegeln, in einer integrierten Topologie umfasst.

9. Halbleiterschaltkreis nach Anspruch 8, welcher eine Konfigurationsliste (41) des Schattenspeicher-Managers (40) umfasst.

10. Halbleiterschaltkreis nach einem der Ansprüche 8 oder 9, welcher den Schattenspeicher (70) umfasst und bei dem insbesondere eine Speicherkapazität des Schattenspeichers (70) geringer ist als eine Speicherkapazität des Arbeitsspeichers (20) oder welcher ausgebildet ist, den mindestens einen Arbeitsspeicherbereich (51) in einen externen Schattenspeicher, insbesondere einen DDR-Speicherbaustein, zu spiegeln, welcher von dem Halbleiterschaltkreis (10) oder extern ansteuerbar ist und insbesondere eine Speicherkapazität aufweist, welche geringer ist als eine Speicherkapazität des Arbeitsspeichers (20).

## Claims

1. Method for protecting an operating system of a security system (50), which is stored in a main memory (20) of a control device of a vehicle, from an irregular modification, in which at least one main memory area (51), which stores at least one part (App 1, App 2, App 3, ..., App N, App N+1, App M) of the operating system of the security system (50), is mirrored by a shadow memory manager (40) from the main memory (20) into a shadow memory (70) and a shadow memory area (71) corresponding to the at least one mirrored main memory area (51) is monitored.

2. Method according to claim 1, in which the at least one main memory area (51) is mirrored by the shadow memory manager (40) automatically and in parallel manner into the shadow memory (70).

3. Method according to any of claims 1 or 2, in which at least one main memory area (61), which stores at least one part (App X) of a comfort system (60) is mirrored by the shadow memory manager (40) from the main memory (20) into the shadow memory (70).

4. Method according to any of claims 1 to 3, in which the shadow memory manager (40) is configured with a configuration list (41) which defines at least one main memory area (51, 61) to be mirrored into the shadow memory (70) and/or in which the shadow memory manager (40) is configured such that a summed storage capacity of the main memory areas (51, 61) to be mirrored is smaller than a total storage capacity of the main memory (20).

5. Method according to claim 4, in which the shadow memory manager is configured during a starting of the control device or in a protected manner during an operation of the control device.

6. Method according to any of claims 1 to 5, in which an access to a main memory area (61), which stores at least a part (App X) of a comfort system (60), is monitored by a hypervisor (80) or an access to a shadow memory area (71), which corresponds to a main memory area (51), which stores at least one part (App 1, App 2, App 3, ..., App N, App N+1, App M) of the at least one security system (50), is monitored by a security inspector (90).

7. Method according to any of claims 1 to 6, in which at least one operating system, stored in the main memory (20), of a security system (50) or comfort system (60) is carried out by at least one dedicated processor (30) which is assigned exclusively to the operating system (50, 60).

8. Semiconductor circuit (100) for protecting a security system (50) from an irregular modification, which comprises in an integrated topology a main memory (20) for storing at least one operating system of a security system (50) and at least one operating system of a comfort system (60), at least one processor (30) for carrying out the at least one operating system of a security system (50) and the at least one operating system of a comfort system (60), and a shadow memory manager (40) which is configured to mirror at least one main memory area (51), which stores a part (App 1, App 2, App 3, ..., App N, App N+1, App M) of the operating system of the security system (50), in a method according to any of claims 1 to 7 from the main memory (20) into a shadow memory (70).

9. Semiconductor circuit according to claim 8, which includes a configuration list (41) of the shadow memory manager (40).

10. Semiconductor circuit according to any of claims 8 or 9, which includes the shadow memory (70) and in which in particular a storage capacity of the shadow memory (70) is smaller than a storage capacity of the main memory (20) or which is designed to mirror the at least one main memory area (51) into an external shadow memory, in particular a DDR memory chip, which can be controlled by the semiconductor circuit (10) or externally and in particular has a storage capacity which is smaller than a storage capacity of the main memory (20).

## Revendications

1. Procédé de protection d'un système de fonctionnement d'un système de sécurité (50), lequel est enregistré dans une mémoire vive (20) d'un appareil de commande d'un véhicule, contre une modification irrégulière, dans lequel au moins une zone de mémoire vive (51), laquelle enregistre au moins une partie (App 1, App 2, App 3, ..., App N, App N+1, App M) du système de fonctionnement du système de sécurité (50), est reflétée par un gestionnaire de mémoire morte (40) de la mémoire vive (20) dans une mémoire morte (70) et une zone de mémoire morte (71) correspondant à l'au moins une zone de mémoire vive (51) reflétée est surveillée.

2. Procédé selon la revendication 1, dans lequel l'au moins une zone de mémoire vive (51) est reflétée par le gestionnaire de mémoire morte (40) automatiquement et parallèlement dans la mémoire morte (70).

3. Procédé selon l'une quelconque des revendications 1 ou 2, dans lequel au moins une zone de mémoire vive (61), laquelle enregistre au moins une partie (App X) d'un système de confort (60), est reflétée par le gestionnaire de mémoire morte (40) de la mémoire vive (20) dans la mémoire morte (70).

4. Procédé selon l'une quelconque des revendications 1 à 3, dans lequel le gestionnaire de mémoire morte (40) est configuré avec une liste de configuration (41), laquelle définit au moins une zone de mémoire vive (51, 61) à refléter dans la mémoire morte (70) et/ou dans lequel le gestionnaire de mémoire morte (40) est configuré de sorte qu'une capacité de mémoire additionnée des zones de mémoire vive (51, 61) à refléter est inférieure à une capacité de mémoire totale de la mémoire vive (20).

5. Procédé selon la revendication 4, dans lequel le gestionnaire de mémoire morte est configuré pendant un démarrage de l'appareil de commande ou protégé pendant un fonctionnement de l'appareil de commande.

6. Procédé selon l'une quelconque des revendications 1 à 5, dans lequel un accès à une zone de mémoire vive (61), laquelle enregistre au moins une partie (App X) d'un système de confort (60), est surveillé par un hyperviseur (80) ou un accès à une zone de mémoire morte (71), laquelle correspond à une zone de mémoire vive (51), laquelle enregistre au moins une partie (App 1, App 2, App 3, ..., App N, App N+1, App M) de l'au moins un système de sécurité (50), est surveillé par un inspecteur de sécurité (90).

7. Procédé selon l'une quelconque des revendications 1 à 6, dans lequel au moins un système de fonctionnement enregistré dans la mémoire vive (20) d'un système de sécurité (50) ou d'un système de confort (60) est réalisé par au moins un processeur dédié (30), lequel est associé exclusivement au système de fonctionnement (50, 60).

8. Circuit à semi-conducteur (100) pour protéger un système de sécurité (50) contre une modification irrégulière, lequel comprend une mémoire vive (20) pour enregistrer au moins un système de fonctionnement d'un système de sécurité (50) et au moins un système de fonctionnement d'un système de confort (60), au moins un processeur (30) pour réaliser l'au moins un système de fonctionnement d'un système de sécurité (50) et l'au moins un système de fonctionnement d'un système de confort (60) et un gestionnaire de mémoire morte (40), lequel est configuré pour refléter au moins une zone de mémoire vive (51), laquelle enregistre une partie (App 1, App 2, App 3, ..., App N, App N+1, App M) du système de fonctionnement du système de sécurité (50), dans un procédé selon l'une quelconque des revendications 1 à 7 de la mémoire vive (20) dans une mémoire morte (70), dans une topologie intégrée.

9. Circuit à semi-conducteur selon la revendication 8, lequel comprend une liste de configuration (41) du gestionnaire de mémoire morte (40).

10. Circuit à semi-conducteur selon l'une quelconque des revendications 8 ou 9, lequel comprend la mémoire morte (70) et dans lequel en particulier une capacité de mémoire de la mémoire morte (70) est inférieure à une capacité de mémoire de la mémoire vive (20), ou lequel est réalisé pour refléter l'au moins une zone de mémoire vive (51) dans une mémoire morte externe, en particulier un module de mémoire DDR, laquelle peut être commandée par un circuit à semi-conducteur (10) ou de manière externe et présente en particulier une capacité de mémoire, laquelle est inférieure à une capacité de mémoire de la mémoire vive (20).
